# EUROPÄISCHE PATENTANMELDUNG

(11) **EP 2 653 990 A1**
(43) Veröffentlichungstag der Anmeldung: **23.10.2013**
(21) Anmeldenummer: 13163531.0
(22) Anmeldetag: 12.04.2013
(51) Int. Cl.: G06F 17/50, G05B 19/042

(54) **Entwurfssystem zum rechnergestützten Entwerfen und Konfigurieren eines Antriebssystems**

(30) Priorität: 17.04.2012 DE 102012206325
(71) Anmelder: Lenze Automation GmbH, 31855 Aerzen (DE)
(72) Erfinder: Hesse, Dr. Peter, 31789 Hameln (DE); Röttger, Andreas, 32427 Minden (DE); Lülsdorf, Sebastian, 31691 Helpsen (DE); Stöwer, Mathias, 30880 Laatzen (DE); Hartmann, Elmar, 31855 Aerzen (DE)
(74) Vertreter: Patentanwälte Ruff, Wilhelm, Beier, Dauster & Partner

(57) **Zusammenfassung**

Ein Entwurfssystem dient zum rechnergestützten Entwerfen und Konfigurieren eines Antriebssystems, wobei in dem Antriebssystem Komponenten umfassend einen einzelnen Elektromotor und ein zugehöriges Steuergerät und Komponenten umfassend mehr als einen Elektromotor und ein zugehöriges Steuergerät anordenbar sind. Das Entwurfssystem umfasst: einen Speicher (10) zum Speichern von Komponentenparametersätzen (11a, 11b, 11c), wobei jeder Komponente ein zugehöriger Komponentenparametersatz zugeordnet ist, wobei innerhalb eines jeweiligen Komponentenparametersatzes einer Komponente mit einem einzelnen Elektromotor eine Einzelelektromotor-Parameterstruktur (12a, 12b) zuordenbar ist und einer Komponente mit mehr als einem Elektromotor eine Mehrelektromotor-Parameterstruktur (13) zuordenbar ist, wobei die Einzelelektromotor-Parameterstruktur einen Einzelelektromotor-Datensatz (14a, 14b) umfasst und die Mehrelektromotor-Parameterstruktur pro Elektromotor einen Einzelelektromotor-Datensatz (14c, 14d) umfasst, und einen Komponentenparametersatzumwandler. Der Komponentenparametersatzumwandler ist dazu ausgebildet, einen der Einzelelektromotor-Datensätze einer Mehrelektromotor-Parameterstruktur auszuwählen und den ausgewählten Einzelelektromotor-Datensatz als den Einzelelektromotor-Datensatz einer Einzelelektromotor-Parameterstruktur zu bestimmen, und/oder einen Einzelelektromotor-Datensatz einer Einzelelektromotor-Parameterstruktur als einen der Einzelelektromotor-Datensätze einer Mehrelektromotor-Parameterstruktur zu bestimmen.

## Beschreibung

Die Erfindung betrifft ein Entwurfssystem zum rechnergestützten Entwerfen und Konfigurieren eines Antriebssystems, wobei in dem Antriebssystem Komponenten umfassend einen einzelnen Elektromotor und ein zugehöriges Steuergerät und Komponenten umfassend mehr als einen Elektromotor und ein zugehöriges Steuergerät anordenbar sind.

Zum Entwerfen und Konfigurieren von elektrischen Antriebssystemen werden aufgrund der Komplexität der Antriebssysteme zunehmend rechnergestützte Entwurfssysteme verwendet. Derartige Entwurfssysteme ermöglichen unter anderem die Auswahl von (Antriebs-) Komponenten, beispielsweise in Form von Elektromotoren und zugehörigen Steuergeräten, Getrieben usw. Mittels des Entwurfssystems ist es in der Regel weiter möglich, einer ausgewählten Komponente spezifische Betriebsparameter zuzuweisen, beispielsweise in Form einer Maximaldrehzahl, eines Maximalmoments, Feldbusparametern, usw.

Elektrische Antriebssysteme können (Antriebs-)Komponenten mit einer einzelnen angetriebenen Achse, d.h. einem einzelnen Elektromotor und einem zugehörigen Steuergerät, beispielsweise in Form eines Frequenzumrichters oder eines Servoumrichters, und Komponenten mit mehr als einer angetriebenen Achse, d.h. mehreren Elektromotoren und einem einzelnen zugehörigen Steuergerät, aufweisen.

Im Verlauf eines Entwurfsprozesses können sich Schwierigkeiten ergeben, wenn bei einer Konfigurationsänderung beispielsweise ein Teil der Parameter einer Komponente mit zwei Elektromotoren einer Komponente mit einem einzelnen Elektromotor zuzuordnen sind oder umgekehrt. Der Erfindung liegt die Aufgabe zugrunde, ein Entwurfssystem zum rechnergestützten Entwerfen und Konfigurieren eines elektrischen Antriebssystems der oben genannten Art zur Verfügung zu stellen, das eine möglichst einfache und flexible Handhabung ermöglicht.

Die Erfindung löst diese Aufgabe durch ein Entwurfssystem nach Anspruch 1. Bevorzugte Ausführungsformen sind Gegenstand der Unteransprüche, deren Wortlaut hiermit durch Bezugnahme zum Inhalt der Beschreibung gemacht wird.

Das Entwurfssystem (CAD-System, Engineeringtool) dient zum rechnergestützten Entwerfen und Konfigurieren eines elektrischen Antriebssystems. In dem Antriebssystem sind (Antriebs-)Komponenten umfassend einen einzelnen Elektromotor und ein einzelnes zugehöriges Steuergerät, beispielsweise in Form eines Frequenzumrichters oder eines Servoumrichters, und Komponenten umfassend mehr als einen Elektromotor und ein einzelnes zugehöriges Steuergerät anordenbar. Hinsichtlich der grundlegenden Funktion derartiger Entwurfssysteme sei auch auf die einschlägige Fachliteratur verwiesen.

Das Entwurfssystem umfasst: einen Speicher, beispielweise in Form einer Festplatte, eines Rechner-Hauptspeichers, eines USB-Sticks, usw., zum Speichern von Komponentenparametersätzen, wobei jeder Komponente ein zugehöriger Komponentenparametersatz zugeordnet ist.

Innerhalb eines jeweiligen Komponentenparametersatzes ist einer Komponente mit einem einzelnen Elektromotor eine Einzelelektromotor-Parameterstruktur zuordenbar bzw. zugeordnet und einer Komponente mit mehr als einem Elektromotor ist eine Mehrelektromotor-Parameterstruktur zuordenbar bzw. zugeordnet, wobei die Einzelelektromotor-Parameterstruktur einen Einzelelektromotor-Datensatz umfasst und die Mehrelektromotor-Parameterstruktur pro Elektromotor einen Einzelelektromotor-Datensatz umfasst, d.h. eine Komponente mit n Elektromotoren umfasst genau n Einzelelektromotor-Datensätze.

Das Entwurfssystem umfasst weiter einen Komponentenparametersatzumwandler, beispielsweise in Form eines Softwaremoduls, der dazu ausgebildet ist, mindestens einen der Einzelelektromotor-Datensätze einer Mehrelektromotor-Parameterstruktur auszuwählen, wobei die Auswahl beispielsweise durch einen Benutzer steuerbar sein kann, und den ausgewählten Einzelelektromotor-Datensatz als den Einzelelektromotor-Datensatz einer bereits vorhandenen oder im Kontext der Umwandlung zu erzeugenden Einzelelektromotor-Parameterstruktur zu bestimmen. Mit anderen Worten ist der Komponentenparametersatzumwandler dazu ausgebildet, denjenigen Teil einer Mehrelektromotor-Parameterstruktur, der einem, beispielsweise durch einen Benutzer vorgebbaren, einzelnen Elektromotor entspricht, d.h. den entsprechenden Einzelelektromotor-Datensatz, in eine Einzelelektromotor-Parameterstruktur umzuwandeln oder als den Einzelelektromotor-Datensatz in eine Einzelelektromotor-Parameterstruktur zu exportieren.

Der Komponentenparametersatzumwandler ist weiter dazu ausgebildet, einen Einzelelektromotor-Datensatz einer Einzelelektromotor-Parameterstruktur als einen der Einzelelektromotor-Datensätze einer bereits vorhandenen oder im Kontext der Umwandlung zu erzeugenden Mehrelektromotor-Parameterstruktur zu bestimmen. Mit anderen Worten ist der Komponentenparametersatzumwandler dazu ausgebildet, eine Einzelelektromotor-Parameterstruktur in denjenigen Teil einer Mehrelektromotor-Parameterstruktur umzuwandeln, der einem, beispielsweise durch einen Benutzer vorgebbaren, einzelnen Elektromotor der Mehrelektromotor-Parameterstruktur entspricht, d.h. den entsprechenden Einzelelektromotor-Datensatz.

Der Komponentenparametersatzumwandler ermöglicht es einem Anwender auf einfache Art und Weise, aus einer bereits erzeugten Einzelelektromotor-Parameterstruktur bei Bedarf eine Mehrelektromotor-Parameterstruktur oder umgekehrt zu generieren.

Das Entwurfssystem kann einen vom Speicher getrennten, nichtflüchtigen Massenspeicher aufweisen, wobei der Komponentenparametersatzumwandler dazu ausgebildet ist, die Komponentenparametersätze in den nichtflüchtigen Massenspeicher zu exportieren und dort beispielsweise in einer Datei mit geeignetem Format zu speichern.

Der Komponentenparametersatzumwandler kann dazu ausgebildet sein, beim Exportieren in Abhängigkeit Exporteinstellungen, die von einem Benutzer vorgegeben werden können, den einen der Einzelelektromotor-Datensätze der Mehrelektromotor-Parameterstruktur auszuwählen und den ausgewählten Einzelelektromotor-Datensatz als den Einzelelektromotor-Datensatz der Einzelelektromotor-Parameterstruktur zu bestimmen, und/oder in Abhängigkeit von den Exporteinstellungen den einen Einzelelektromotor-Datensatz der Einzelelektromotor-Parameterstruktur als den einen der Einzelelektromotor-Datensätze der Mehrelektromotor-Parameterstruktur zu bestimmen. In anderen Worten kann die Umwandlung im Zuge eines Exports erfolgen.

Der Komponentenparametersatzumwandler kann dazu ausgebildet sein, in den nichtflüchtigen Massenspeicher exportierte Komponentenparametersätze zu importieren, wobei der Komponentenparametersatzumwandler weiter dazu ausgebildet sein kann, beim Importieren in Abhängigkeit von Importeinstellungen, die von einem Benutzer vorgegeben werden können, den einen der Einzelelektromotor-Datensätze der Mehrelektromotor-Parameterstruktur auszuwählen und den ausgewählten Einzelelektromotor-Datensatz als den Einzelelektromotor-Datensatz der Einzelelektromotor-Parameterstruktur zu bestimmen, und/oder in Abhängigkeit von den Importeinstellungen den einen Einzelelektromotor-Datensatz der Einzelelektromotor-Parameterstruktur als den einen der Einzelelektromotor-Datensätze der Mehrelektromotor-Parameterstruktur zu bestimmen. In anderen Worten kann die Umwandlung auch im Zuge eines Imports erfolgen.

Ein jeweiliger Komponentenparametersatz kann, neben der Einzelelektromotor-Parameterstruktur bzw. der Mehrelektromotor-Parameterstruktur, eine Feldbus-Adresse des Steuergeräts einer zugehörigen Komponente und/oder eine Seriennummer des Steuergeräts einer zugehörigen Komponente umfassen.

Eine jeweilige Einzelelektromotor-Parameterstruktur und eine jeweilige Mehrelektromotor-Parameterstruktur können, neben dem bzw. den Einzelelektromotor-Datensätzen, jeweils motorunabhängige Parameter wie Feldbusparameter, beispielsweise in Form einer Übertragungsrate des Feldbusses, des Steuergeräts einer zugehörigen Komponente und/oder Zykluszeiten des Steuergeräts einer zugehörigen Komponente umfassen.

Ein jeweiliger Einzelelektromotor-Datensatz kann motorspezifische Parameter wie Werte eines Wicklungswiderstands und/oder einer Wicklungsinduktivität des Elektromotors einer zugehörigen Komponente und/oder Reglereinstellungen des Steuergeräts einer zugehörigen Komponente umfassen.

Die Erfindung wird nachfolgend unter Bezugnahme auf die Zeichnung beschrieben, die Ausführungsformen der Erfindung darstellt. Hierbei zeigt schematisch:

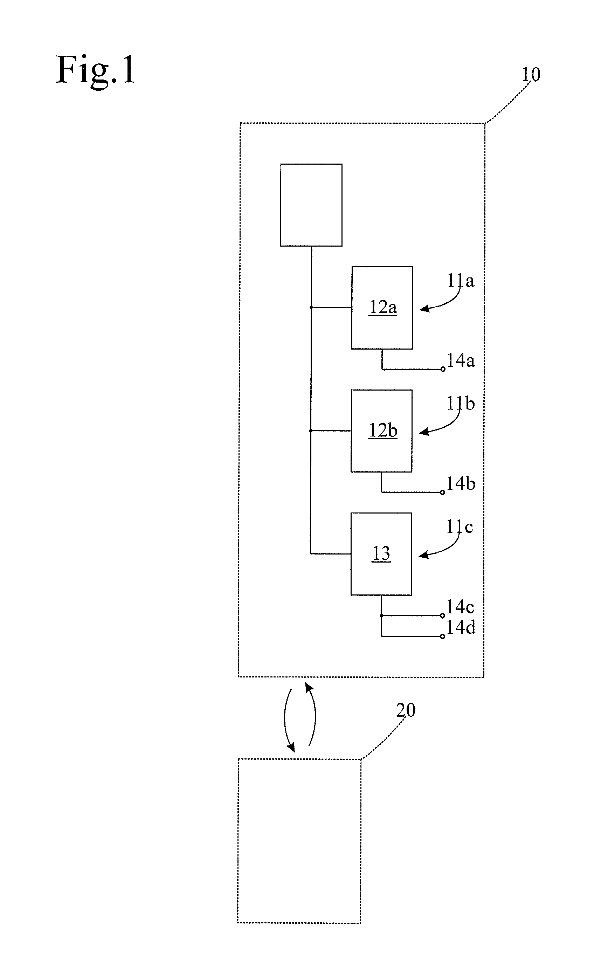

- Fig.1: mehrere Komponentenparametersätze von Antriebskomponenten eines elektrischen Antriebssystems.

Fig. 1 zeigt drei Komponentenparametersätze 11a, 11 b und 11 c von Antriebskomponenten eines nicht gezeigten, herkömmlichen elektrischen Antriebssystems, die in einem Speicher 10 eines Entwurfssystem zum rechnergestützten Entwerfen und Konfigurieren des Antriebssystems gespeichert sind.

Das Antriebssystem umfasst vorliegend exemplarisch zwei (Antriebs)Komponenten mit jeweils einem einzelnen Elektromotor und einem einzelnen zugehörigen Steuergerät, die auch als Einzelachs-Antriebskomponenten bezeichnet werden, und eine (Antriebs)Komponente mit zwei Elektromotoren und einem einzelnen zugehörigen Steuergerät, die auch als Doppelachs-Antriebskomponente bezeichnet wird.

Den Komponenten mit einem einzelnen Elektromotor sind die Komponentenparametersätze 11a bzw. 11 b zugeordnet und der Komponente mit zwei Elektromotoren ist der Komponentenparametersatz 11 c zugeordnet.

Die Komponentenparametersätze 11a und 11 b umfassen eine Einzelelektromotor-Parameterstruktur 12a bzw. 12b und der Komponentenparametersatz 11 c umfasst eine Mehrelektromotor-Parameterstruktur 13.

Die Einzelelektromotor-Parameterstrukturen 12a und 12b umfassen einen Einzelelektromotor-Datensatz 14a bzw. 14b und die Mehrelektromotor-Parameterstruktur 13 umfasst pro Elektromotor einen Einzelelektromotor-Datensatz 14c bzw. 14d.

Ein jeweiliger Komponentenparametersatz 11a, 11 b und 11 c kann, neben der zugehörigen Einzelelektromotor-Parameterstruktur 12a bzw. 12b bzw. der Mehrelektromotor-Parameterstruktur 13, eine Feldbus-Adresse des Steuergeräts der zugehörigen Komponente und/oder eine Seriennummer des Steuergeräts der zugehörigen Komponente umfassen.

Die Einzelelektromotor-Parameterstrukturen 12a und 12b und die Mehrelektromotor-Parameterstruktur 13 können, neben dem bzw. den Einzelelektromotor-Datensätzen 14a, 14b, 14c bzw. 14d, motorunabhängige Parameter wie Feldbusparameter des Steuergeräts der zugehörigen Komponente und/oder Zykluszeiten des Steuergeräts der zugehörigen Komponente umfassen.

Ein jeweiliger Einzelelektromotor-Datensatz 14a, 14b, 14c und 14d kann motorspezifische Parameter wie Werte eines Wicklungswiderstands und/oder einer Wicklungsinduktivität des Elektromotors der zugehörigen Komponente und/oder Reglereinstellungen des Steuergeräts der zugehörigen Komponente umfassen.

Die Erfindung wird nachfolgend weiter unter Bezugnahme auf typische Anwendungsszenarien oder Use-Cases beschrieben.

Es sei angenommen, dass ein Benutzer mittels des Entwurfssystems das Antriebssystem wie in Fig. 1 gezeigt entworfen und konfiguriert hat. Weiter sei angenommen, dass die Doppelachs-Antriebskomponente, der der Komponentenparametersatz 11 c entspricht, derart konfiguriert wurde, dass die Elektromotoren mit jeweils 5A Maximalstrom betreibbar sind, was in den entsprechenden Einzelelektromotor-Datensätzen 14c und 14d hinterlegt ist.

Wenn sich nun im Verlauf des Entwurfs als neue Randbedingung ergibt, dass ein Maximalstrom eines der Elektromotoren der Doppelachs-Antriebskomponente auf 10A zu erhöhen ist, kann eine maximale Ausgangsleistung des Steuergeräts der Doppelachs-Antriebskomponente überschritten sein, so dass diese Randbedingung mittels einer Doppelachs-Antriebskomponente grundsätzlich nicht mehr erfüllbar ist.

Erfindungsgemäß wird nun mittels des erfindungsgemäßen Entwurfssystems die Doppelachs-Antriebskomponente in eine Einzelachs-Antriebskomponente mit 5A Maximalstrom und eine weitere Einzelachs-Antriebskomponente mit 10A Maximalstrom umgewandelt. Hierzu können zunächst zwei neue Komponentenparametersätze jeweils mit Einzelelektromotor-Parameterstruktur erzeugt werden, die nach dem Erzeugen mit Standard-Parametersätzen und Standard-Datensätzen gefüllt sind. Anschließend wird beispielweise der Einzelelektromotor-Datensatz 14c als der Einzelelektromotor-Datensatz einer der beiden neu erzeugten Komponentenparametersätze übernommen und der Einzelelektromotor-Datensatz 14d als der Einzelelektromotor-Datensatz der anderen der beiden neu erzeugten Komponentenparametersätze übernommen bzw. festgelegt. Nun kann bei einem der Einzelelektromotor-Datenätze der Maximalstrom auf 10A erhöht werden.

Die Umwandlung kann beispielsweise durch einen Export der Komponentenparametersätze 11a, 11 b und 11 c in einen nichtflüchtigen Massenspeicher 20 und anschließenden Import der der Komponentenparametersätze 11a, 11 b und 11 c erfolgen. Beim Export können die Komponentenparametersätze 11a, 11 b und 11 c unverändert in den Massenspeicher 20 exportiert werden, indem sie beispielsweise in eine XML-Datei geschrieben werden. Beim Import kann einem Benutzer nun eine entsprechende Umwandlungsmöglichkeit angeboten und bei Bedarf durchgeführt werden.

Ein weiterer Use-Case ist beispielsweise, dass im Servicefall ein Parametersatz einer Doppelachse in eine Datei exportiert und an eine Service-Stelle gesendet wird. Die Service-Stelle kann die Datei dann in zwei Einzelachsen importieren.

Als weiterer Use-Case ist beispielsweise eine Testinbetriebnahme zu nennen, bei der ein Parametersatz einmalig archiviert werden kann, so dass bei der Inbetriebnahme des Antriebssystems bereits bestimmte Antriebssystemfunktionen vorgetestet werden können, unabhängig davon, ob Einzel- oder Doppelachsen vorliegen.

Bei den gezeigten Ausführungsformen wird ein Teil eines Parametersatzes einer Mehrfach- oder Doppelachse (wahlweise 14c oder 14d) in einen Parametersatz einer Einzelachse umgewandelt, oder ein Parametersatz einer Einzelachse wird in einen Teil eines Parametersatzes einer Doppelachse (wahlweise 14c oder 14d) umgewandelt. Durch diese Umwandlungsfunktion ist es einem Anwender später möglich, aus einem Einzel- einen Doppelachsparametersatz oder umgekehrt zu generieren.

Es versteht sich, dass anstelle der gezeigten zwei Achsen bzw. Elektromotoren auch mehr als zwei Achsen bzw. Elektromotoren sowie zugehörige Mehrelektromotor-Parameterstrukturen vorgesehen sein können.

## Patentansprüche

1. Entwurfssystem zum rechnergestützten Entwerfen und Konfigurieren eines Antriebssystems, wobei in dem Antriebssystem Komponenten umfassend einen einzelnen Elektromotor und ein zugehöriges Steuergerät und Komponenten umfassend mehr als einen Elektromotor und ein zugehöriges Steuergerät anordenbar sind, wobei das Entwurfssystem umfasst:
- einen Speicher (10) zum Speichern von Komponentenparametersätzen (11a, 11 b, 11 c), wobei jeder Komponente ein zugehöriger Komponentenparametersatz zugeordnet ist, wobei innerhalb eines jeweiligen Komponentenparametersatzes einer Komponente mit einem einzelnen Elektromotor eine Einzelelektromotor-Parameterstruktur (12a, 12b) zuordenbar ist und einer Komponente mit mehr als einem Elektromotor eine Mehrelektromotor-Parameterstruktur (13) zuordenbar ist, wobei die Einzelelektromotor-Parameterstruktur einen Einzelelektromotor-Datensatz (14a, 14b) umfasst und die Mehrelektromotor-Parameterstruktur pro Elektromotor einen Einzelelektromotor-Datensatz (14c, 14d) umfasst, und
- einen Komponentenparametersatzumwandler, der dazu ausgebildet ist,
- einen der Einzelelektromotor-Datensätze einer Mehrelektromotor-Parameterstruktur auszuwählen und den ausgewählten Einzelelektromotor-Datensatz als den Einzelelektromotor-Datensatz einer Einzelelektromotor-Parameterstruktur zu bestimmen, und/oder
- einen Einzelelektromotor-Datensatz einer Einzelelektromotor-Parameterstruktur als einen der Einzelelektromotor-Datensätze einer Mehrelektromotor-Parameterstruktur zu bestimmen.

2. Entwurfssystem nach Anspruch 1, **gekennzeichnet durch** einen vom Speicher getrennten, nichtflüchtigen Massenspeicher (20), wobei der Komponentenparametersatzumwandler dazu ausgebildet ist, die Komponentenparametersätze in den nichtflüchtigen Massenspeicher zu exportieren.

3. Entwurfssystem nach Anspruch 2, **dadurch gekennzeichnet, dass** der Komponentenparametersatzumwandler dazu ausgebildet ist, beim Exportieren
- in Abhängigkeit von Exporteinstellungen den einen der Einzelelektromotor-Datensätze der Mehrelektromotor-Parameterstruktur auszuwählen und den ausgewählten Einzelelektromotor-Datensatz als den Einzelelektromotor-Datensatz der Einzelelektromotor-Parameterstruktur zu bestimmen, und/oder
- in Abhängigkeit von den Exporteinstellungen den einen Einzelelektromotor-Datensatz der Einzelelektromotor-Parameterstruktur als den einen der Einzelelektromotor-Datensätze der Mehrelektromotor-Parameterstruktur zu bestimmen.

4. Entwurfssystem nach Anspruch 2 oder 3, **dadurch gekennzeichnet, dass** der Komponentenparametersatzumwandler dazu ausgebildet ist, in den nichtflüchtigen Massenspeicher exportierte Komponentenparametersätze zu importieren, wobei der Komponentenparametersatzumwandler weiter dazu ausgebildet ist, beim Importieren
- in Abhängigkeit von Importeinstellungen den einen der Einzelelektromotor-Datensätze der Mehrelektromotor-Parameterstruktur auszuwählen und den ausgewählten Einzelelektromotor-Datensatz als den Einzelelektromotor-Datensatz der Einzelelektromotor-Parameterstruktur zu bestimmen, und/oder
- in Abhängigkeit von den Importeinstellungen den einen Einzelelektromotor-Datensatz der Einzelelektromotor-Parameterstruktur als den einen der Einzelelektromotor-Datensätze der Mehrelektromotor-Parameterstruktur zu bestimmen.

5. Entwurfssystem nach einem der vorhergehenden Ansprüche, **dadurch gekennzeichnet, dass** ein jeweiliger Komponentenparametersatz eine Feldbus-Adresse des Steuergeräts einer zugehörigen Komponente und/oder eine Seriennummer des Steuergeräts einer zugehörigen Komponente umfasst.

6. Entwurfssystem nach einem der vorhergehenden Ansprüche, **dadurch gekennzeichnet, dass** eine jeweilige Einzelelektromotor-Parameterstruktur und eine jeweilige Mehrelektromotor-Parameterstruktur jeweils Feldbusparameter des Steuergeräts einer zugehörigen Komponente und/oder Zykluszeiten des Steuergeräts einer zugehörigen Komponente umfassen.

7. Entwurfssystem nach einem der vorhergehenden Ansprüche, **dadurch gekennzeichnet, dass** ein jeweiliger Einzelelektromotor-Datensatz Werte eines Wicklungswiderstands und/oder einer Wicklungsinduktivität des zugehörigen Elektromotors und/oder Reglereinstellungen des Steuergeräts einer zugehörigen Komponente umfasst.
